# EUROPÄISCHE PATENTSCHRIFT

(11) **EP 3 757 043 B1**
(45) Veröffentlichungstag und Bekanntmachung des Hinweises auf die Patenterteilung: **11.01.2023**
(21) Anmeldenummer: 19181969.7
(22) Anmeldetag: 24.06.2019
(51) Int. Cl.: B65G 47/84, B41F 17/00

(54) **UMSETZEINRICHTUNG, TRANSPORTSYSTEM UND VERFAHREN ZUM ABZIEHEN VON HÜLSENFÖRMIGEN WERKSTÜCKEN VON EINER ERSTEN FÖRDEREINRICHTUNG UND ZUM AUFSCHIEBEN DER HÜLSENFÖRMIGEN WERKSTÜCKE AUF EINE ZWEITE FÖRDEREINRICHTUNG**
TRANSFER DEVICE, TRANSPORT SYSTEM AND METHOD FOR REMOVING TUBULAR WORKPIECES FROM A FIRST CONVEYOR AND PUSHING THE TUBULAR WORKPIECES TO A SECOND CONVEYOR
DISPOSITIF DE CONVERSION, SYSTÈME DE TRANSPORT ET PROCÉDÉ D'ENLÈVEMENT DE PIÈCES SOUS FORME DE DOUILLE D'UN PREMIER DISPOSITIF CONVOYEUR ET DE DÉPLACEMENT DE PIÈCES SOUS FORME DE DOUILLE VERS UN SECOND DISPOSITIF CONVOYEUR

(43) Veröffentlichungstag der Anmeldung: 30.12.2020
(73) Patentinhaber: Hinterkopf GmbH, 73054 Eislingen/Fils (DE)
(72) Erfinder: Schulz, Josef, 73342 Bad Ditzenbach (DE)
(74) Vertreter: Patentanwälte Magenbauer & Kollegen Partnerschaft mbB

(56) Entgegenhaltungen:
- EP-A1- 1 132 207
- EP-A1- 2 562 103
- DE-A1- 10 261 127
- US-A1- 2009 183 970

## Beschreibung

Die Erfindung betrifft eine Umsetzeinrichtung zum Abziehen von hülsenförmigen Werkstücken von einer ersten Fördereinrichtung und zum Aufschieben der hülsenförmigen Werkstücke auf eine zweite Fördereinrichtung.

Aus der EP 2 840 046 A1 ist eine Fördereinrichtung zur Förderung von Werkstücken bekannt, mit einem drehbeweglich um eine Rotorachse gelagerten Rotor, mit einem Drehantrieb für eine Einleitung einer Rotationsbewegung auf den Rotor und mit wenigstens einer Werkstückhaltergruppe, die wenigstens zwei am Rotor angebrachte Werkstückhalter umfasst, die zu einer wenigstens paarweisen Aufnahme von Werkstücken an einer Aufnahmeposition und zu einer wenigstens paarweisen Abgabe von Werkstücken an einer Abgabeposition während der Rotationsbewegung des Rotors ausgebildet sind, sowie mit Verstellmitteln, die mit zumindest einem Werkstückhalter einer Werkstückhaltergruppe gekoppelt sind und die für eine zyklische Einstellung einer Beabstandung von Werkstückhaltern der Werkstückhaltergruppe in Abhängigkeit von der Rotationsbewegung des Rotors ausgebildet sind.

Die EP 1 132 207 A1 offenbart die Merkmale der Oberbegriffe der Ansprüche 1 und 9 und eine Transfervorrichtung, mit der in einer Druckmaschine zu bedruckende Hohlkörper von einer Zufuhr-Fördereinrichtung an einen der Druckvorrichtung zugeordneten Spindelteller transferiert werden können. Da die Hohlkörper von der Zufuhr-Fördereinrichtung mit einem Abstand zugeführt werden, der geringer ist als die Teilung der zur Aufnahme der Hohlkörper dienenden Aufnahmespindeln des Spindeltellers ist ein Transferrotor zwischengeschaltet, der über Halteeinheiten verfügt, die den Hohlkörpertransfer im Rahmen einer Teilungsanpassung durchführen.

Die Aufgabe der Erfindung besteht darin, eine Umsetzeinrichtung, ein Transportsystem und ein Verfahren zum Abziehen von hülsenförmigen Werkstücken von einer ersten Fördereinrichtung und zum Aufschieben der hülsenförmigen Werkstücke auf eine zweite Fördereinrichtung bereitzustellen, die eine verbesserte Abstimmung auf unterschiedliche Fördereinrichtungen ermöglicht.

Diese Aufgabe wird für eine Umsetzeinrichtung der eingangs genannten Art mit den Merkmalen des Anspruchs 1 gelöst. Hierbei umfasst die Umsetzeinrichtung einen Linearantrieb, der ein Antriebsgehäuse und eine linearbeweglich am Antriebsgehäuse aufgenommene Koppelstange zur Bereitstellung einer Linearbewegung längs einer Bewegungsachse umfasst, wobei an einem dem Antriebsgehäuse abgewandten Endbereich der Koppelstange eine Getriebeanordnung angeordnet ist, die einen schwenkbeweglich um die Bewegungsachse gelagerten Schwenkkörper umfasst, an dem ein drehbeweglich um eine erste Drehachse angebrachter erster Werkstückgreifer und ein zweiter Werkstückgreifer angeordnet sind, und wobei die Getriebeanordnung eine Stelleinrichtung umfasst, die für eine Einleitung einer Stellbewegung zur Einstellung eines Abstands zwischen einem in radialer Richtung von der Bewegungsachse entfernt angeordneten ersten Greifbereich des ersten Werkstückgreifers und einem in radialer Richtung von der Bewegungsachse entfernt angeordneten zweiten Greifbereich des zweiten Werkstückgreifers ausgebildet ist, sowie mit einem Schwenkantrieb, der ein mit dem Antriebsgehäuse gekoppeltes Schwenkantriebsgehäuse und einer schwenkbeweglich am Schwenkantriebsgehäuse gelagerte Schwenkwelle umfasst, wobei die Schwenkwelle für eine Einleitung einer Schwenkbewegung auf den Schwenkkörper und für eine Ansteuerung der Stelleinrichtung zur Einleitung einer mit der Schwenkbewegung verbundenen Zwangsschwenkbewegung auf den ersten Werkstückgreifer ausgebildet ist.

Der Linearantrieb dient zur Bereitstellung der Linearbewegung, mit der ein Abziehen von Werkstücken von den ersten Aufnahmedornen einer ersten Fördereinrichtung und ein Aufschieben der Werkstücke auf zweite Aufnahmedorne einer zweiten Fördereinrichtung vorgenommen wird, wobei davon ausgegangen wird, dass die ersten Aufnahmedorne und die zweiten Aufnahmedorne parallel zueinander ausgerichtet sind. Bei den Werkstücken wird davon ausgegangen, dass es sich um hülsenförmige, bevorzugt um dünnwandige Körper, besonders bevorzugt mit einem geschlossenen Bodenbereich, insbesondere um Aerosoldosenrohlinge aus Aluminium oder um Kunststofftubenrohlinge handelt, die in einer Produktionslinie mit Hilfe der ersten Transporteinrichtung und mit Hilfe der zweiten Transporteinrichtung sowie mit zugeordneten Bearbeitungsmaschinen wie beispielsweise Druckwerken oder Lackierwerken, bearbeitet werden können. Der Linearantrieb kann als Pneumatikzylinder oder Hydraulikzylinder oder vorzugsweise als elektromechanischer Antrieb, ausgebildet sein. Besonders bevorzugt ist der Linearantrieb als elektrischer Getriebemotor ausgebildet, dessen Motorgehäuse als Antriebsgehäuse dient und insbesondere an einem Maschinenrahmen festgelegt sein kann und der über ein Zugmittel, beispielsweise eine Kette oder einen Zahnriemen, eine Rotationsbewegung eines Kettenrads oder einer Riemenscheibe in eine Linearbewegung eines linearbeweglich geführten Schlittens umsetzt, wobei der Schlitten seinerseits mit einer Koppelstange verbunden ist, die zur Übertragung der Linearbewegung des Schlittens dient. Die Koppelstange erstreckt sich längs einer Bewegungsachse und führt die lineare Bewegung, insbesondere eine lineare Reversierbewegung, längs der Bewegungsachse aus.

An einem dem Antriebsgehäuse abgewandten Endbereich der Koppelstange ist eine Getriebeanordnung angeordnet, die die wenigstens zwei Werkstückgreifer trägt, wobei jeder der Werkstückgreifer zum Ergreifen eines Werkstücks ausgebildet ist. Die Aufgabe der Getriebeanordnung besteht darin, eine zyklische Schwenkbewegung für die wenigstens zwei Werkstückgreifer bereitzustellen, mit der eine Verlagerung der Werkstückgreifer und der gegebenenfalls daran aufgenommenen Werkstücke zwischen den ersten Aufnahmedornen der ersten Fördereinrichtung und den zweiten Aufnahmedornen der zweiten Fördereinrichtung bewirkt werden kann.

Hierzu umfasst die Getriebeanordnung einen schwenkbeweglich um die Bewegungsachse gelagerten Schwenkkörper, an dem die wenigstens zwei Werkstückgreifer angebracht sind. Beispielhaft ist vorgesehen, dass der Schwenkkörper schwenkbeweglich um einen vorgebbaren Schwenkwinkelbereich an der Koppelstange angebracht ist. Jeder der Werkstückgreifer weist einen Greifbereich auf, der zur Aufnahme eines jeweiligen Werkstücks ausgebildet ist. Die Greifbereiche der Werkstückgreifer sind jeweils in radialer Richtung entfernt von der Bewegungsachse angeordnet, vorzugsweise weisen die Greifbereiche jeweils einen identischen Radialabstand von der Bewegungsachse auf. Besonders bevorzugt ist vorgesehen, dass eine erste Verbindungslinie zwischen einem ersten Greifbereich und der Bewegungsachse und eine zweite Verbindungslinie zwischen einem zweiten Greifbereich und der Bewegungsachse jeweils eine gleiche, gegebenenfalls variable, Länge aufweisen und einen vorgebbaren, insbesondere veränderlichen, spitzen Winkel einschließen.

Um eine Anpassung eines Abstands zwischen den beiden Werkstückgreifern und damit eine Adaptation an unterschiedliche Teilungen der ersten Aufnahmedorne der ersten Fördereinrichtung und der zweiten Aufnahmedorne der zweiten Fördereinrichtung zu ermöglichen, ist der erste Werkstückgreifer drehbeweglich um eine erste Drehachse am Schwenkkörper angebracht. Dabei ist ein vorgebbarer Abstand zwischen der Drehachse und dem ersten Greifbereich des ersten Werkstückgreifers vorgesehen. Bevorzugt ist die erste Drehachse parallel zur Bewegungsachse ausgerichtet. Eine Beeinflussung einer Schwenkstellung des ersten Werkstückgreifers relativ zum zweiten Werkstückgreifer, der beispielhaft fest am Schwenkkörper angeordnet sein kann, erfolgt mit Hilfe einer der Getriebeanordnung zugeordneten Stelleinrichtung, die für eine Einleitung einer Stellbewegung zur Einstellung eines Abstands zwischen dem in radialer Richtung von der Bewegungsachse entfernt angeordneten ersten Greifbereich des ersten Werkstückgreifers und dem in radialer Richtung von der Bewegungsachse entfernt angeordneten zweiten Greifbereich des zweiten Werkstückgreifers ausgebildet ist.

Eine Bereitstellung einer Schwenkbewegung für die Stelleinrichtung erfolgt mit Hilfe eines Schwenkantriebs, der ein mit dem Antriebsgehäuse gekoppeltes Schwenkantriebsgehäuse und einer schwenkbeweglich am Schwenkantriebsgehäuse gelagerte Schwenkwelle umfasst. Beispielhaft ist der Schwenkantrieb als elektrischer Getriebemotor ausgebildet, wobei die Schwenkwelle des Schwenkantriebs eine Schwenkbewegung durchführen kann und für eine Einleitung einer Schwenkbewegung auf den Schwenkkörper ausgebildet ist. Mit der Ansteuerung der Stelleinrichtung durch den Schwenkantrieb erfolgt eine Einleitung der Schwenkbewegung auf den Schwenkkörper sowie eine Einleitung einer Zwangsschwenkbewegung auf den ersten Werkstückgreifer, um dadurch die Abstandseinstellung zwischen dem ersten Werkstückgreifer und dem zweiten Werkstückgreifer zu bewirken.

Bevorzugt ist vorgesehen, dass ein Antriebsgehäuse des Schwenkantriebs kinematisch, insbesondere starr über einen Maschinenrahmen, mit einem Antriebsgehäuse des Linearantriebs verbunden ist.

Vorteilhafte Weiterbildungen der Erfindung sind Gegenstand der Unteransprüche.

Zweckmäßig ist es, wenn die Stelleinrichtung ein Steuermittel umfasst, das drehfest mit der Koppelstange verbunden ist und das wenigstens eine Steuerfläche umfasst, um bei einer Schwenkbewegung des Schwenkkörpers und der daran angeordneten ersten und zweiten Werkstückgreifer die Zwangsschwenkbewegung in Abhängigkeit von der Schwenkbewegung zu bewirken. Das Steuermittel dient zur Bereitstellung einer Zwangsbewegung für den ersten Werkstückgreifer, damit dieser die Abstandsänderung gegenüber dem zweiten Werkstückgreifer zur Anpassung an unterschiedliche Teilungen der der ersten Aufnahmedorne der ersten Fördereinrichtung und der zweiten Aufnahmedorne der zweiten Fördereinrichtung gewährleisten kann. Beispielhaft ist das Steuermittel als Kurvenscheibe ausgebildet, die eine zumindest bereichsweise eben ausgebildete und/oder eine zumindest bereichsweise gekrümmt ausgebildete Steuerfläche umfasst. Hierbei ist vorzugsweise vorgesehen, dass einer oder mehrere Krümmungsradien, insbesondere alle Krümmungsradien, die die Steuerfläche aufweist, bezogen auf Mittelpunktachsen ausgerichtet sind, die ihrerseits parallel zur Bewegungsachse ausgerichtet sind. Mit Hilfe der Steuerfläche kann eine zwangsläufige Abhängigkeit für die Zwangsschwenkbewegung des ersten Werkstückgreifers bei der Schwenkbewegung des Schwenckörpers gegenüber der Bewegungsachse gewährleistet werden.

Bevorzugt ist vorgesehen, dass das Steuermittel eine die Steuerfläche umfassende Steuernut aufweist und dass der erste Werkstückgreifer mit einem Führungsmittel, insbesondere mit einer Führungsrolle, in die Steuernut eingreift. Hierdurch wird eine zuverlässige Zwangssteuerung für den ersten Werkstückgreifer bei der Durchführung der Schwenkbewegung des Schwenkkörpers relativ zur Bewegungsachse sichergestellt. Vorzugsweise ist die Steuernut in einer dem Steuermittel zugehörigen Steuerplatte eingebracht, die auch als Kurvenscheibe bezeichnet werden kann. Das Führungsmittel ist vorzugsweise in der Art eines Zapfens ausgebildet, der in die Steuernut eingreift und mit einer radial außenliegenden Außenumfangsfläche an der Steuerfläche der Steuernut anliegt. Bevorzugt ist vorgesehen, dass dem als Zapfen ausgebildeten Führungsmittel eine Führungsrolle zugeordnet ist, so dass bei einer Relativbewegung zwischen dem Führungsmittel und der Steuerfläche eine reibungsarme Rollreibung auftritt.

Bei einer Ausgestaltung der Erfindung ist vorgesehen, dass der zweite Werkstückgreifer drehbeweglich um eine zweite Drehachse am Schwenkkörper angebracht ist, wobei vorzugsweise vorgesehen ist, dass die erste Drehachse des ersten Werkstückgreifers und die zweite Drehachse des zweiten Werkstückgreifers jeweils mit identischen Radialabstand parallel zur Bewegungsachse angeordnet sind. Bei einer drehbeweglichen Anordnung des zweiten Werkstückgreifers am Schwenkkörper kann vorgesehen sein, dass eine Abstandsänderung zwischen dem ersten Werkstückgreifer und dem zweiten Werkstückgreifer durch eine jeweils gegensinnige Annäherungsbewegung oder Entfernungsbewegung zwischen den beiden Werkstückgreifern verwirklicht wird. Somit muss jeder der beiden Werkstückgreifer nur den halben Schwenkwinkel überstreichen, den ansonsten der erste Werkstückgreifer allein überstreichen müsste, um die gewünschte Abstandseinstellung zwischen den beiden Werkstückgreifern zu verwirklichen. Durch diese Maßnahme kann also eine signifikante Verringerung der Winkelbeschleunigung für den jeweiligen Werkstückgreifer und das gegebenenfalls am Werkstückgreifer aufgenommene Werkstück erzielt werden.

Vorzugsweise ist die Getriebeanordnung für eine Abstandseinstellung zwischen einem von der ersten Drehachse beabstandet angeordneten Greifbereich des ersten Werkstückgreifers und einem von der zweiten Drehachse beabstandet angeordneten Greifbereich des zweiten Werkstückgreifers in Abhängigkeit von einem Schwenkwinkel des Schwenkkörpers gegenüber der Bewegungsachse ausgebildet.

Bei einer vorteilhaften Weiterbildung der Erfindung ist vorgesehen, dass der erste Werkstückgreifer und der zweite Werkstückgreifer jeweils ein Greifmittel umfassen, das eine Ausnehmung aufweist, die für eine zeitweilige Festlegung eines quer zur Bewegungsachse ausgerichteten Bodenbereichs und/oder eines parallel zur Bewegungsachse ausgerichteten Hülsenabschnitts eines Werkstücks ausgebildet ist, wobei eine Erstreckungsachse der Ausnehmung parallel zur Bewegungsachse ausgerichtet ist. Das Greifmittel kann beispielsweise als Unterdrucksauger oder als pneumatisch oder elektrisch oder hydraulisch betätigbare Spannzange ausgebildet sein. Hierzu sind in der Ausnehmung des Greifmittels entsprechende Greifeinrichtungen ausgebildet. Das Greifmittel ermöglicht es, das Werkstück an einem dem jeweiligen Werkstückgreifer zugewandten Hülsenabschnitt und/oder an einem dem jeweiligen Werkstückgreifer zugewandten, insbesondere kreisförmig ausgebildeten, Bodenbereich zu ergreifen und zeitweilig zu fixieren. Hierbei sind Greifkräfte, die vom Greifmittel auf das Werkstück ausgeübt werden können, derart bemessen, dass die Längsbeschleunigung längs der Bewegungsachse beim Abziehen des Werkstücks und die Querbeschleunigungen beim Verlagern des Werkstücks zwischen der ersten Fördereinrichtung und der zweiten Fördereinrichtung zuverlässig abgestützt werden können.

Die Aufgabe der Erfindung wird für ein Transportsystem der eingangs genannten Art mit den nachfolgenden Merkmalen gelöst: das Transportsystem umfasst eine erste Fördereinrichtung, die eine Vielzahl von ersten Aufnahmedornen mit einer ersten Teilung umfasst und die für eine Bereitstellung einer Umlaufbewegung der ersten Aufnahmedorne längs eines ersten Transportpfads ausgebildet ist, sowie eine zweite Fördereinrichtung, die eine Vielzahl von zweiten Aufnahmedornen mit einer zweiten Teilung umfasst und die für eine Bereitstellung einer Umlaufbewegung der zweiten Aufnahmedorne längs eines zweiten Transportpfads ausgebildet ist, wobei die erste Fördereinrichtung und die zweite Fördereinrichtung zumindest in einem Umsetzbereich, in dem der erste Transportpfad und der zweite Transportpfad einen minimalen Abstand aufweisen, in parallel zueinander ausgerichteten Transportebenen angeordnet sind, sowie mit einer dem Umsetzbereich zugeordneten Umsetzeinrichtung nach einem der Ansprüche 1-6, die zum Abziehen von hülsenförmigen Werkstücken von den ersten Aufnahmedornen der ersten Fördereinrichtung und zum Aufschieben der hülsenförmige Werkstücke auf die Aufnahmedorne der zweiten Fördereinrichtung ausgebildet ist.

Beispielhaft ist die erste Fördereinrichtung als Rundschalttisch ausgebildet, der eine Vielzahl von ersten Aufnahmedornen umfasst, die parallel zu einer Drehachse des Rundschalttischs in jeweils identischem radialen Abstand und in identischer Winkelteilung zur Drehachse angeordnet sind. Damit bestimmt die erste Fördereinrichtung rein exemplarisch einen kreisrunden Transportpfad, wobei dem Transportpfad eine oder mehrere Bearbeitungseinrichtungen zugeordnet sein können, die beispielsweise eine Oberflächenbehandlung des Werkstücks wie beispielsweise eine Bedruckung oder Lackierung einer Werkstückaußenoberfläche ermöglichen. Vorzugsweise ist vorgesehen, dass die erste Fördereinrichtung mit einer intermittierenden Drehschrittbewegung betrieben wird, bei der die ersten Aufnahmedorne auf dem Transportpfad jeweils zwischen fest vorgegebenen Haltepositionen gefördert werden, wobei an den Haltepositionen beispielsweise eine Bearbeitung der Werkstücke oder ein Abziehen der Werkstücke erfolgen kann.

Rein exemplarisch kann die zweite Fördereinrichtung als Kettenförderer ausgebildet sein, bei dem eine Gliederkette eine Vielzahl von stabförmigen zweiten Aufnahmedornen umfasst, wobei eine Teilung zwischen benachbarten Aufnahmedornen einem ganzzahligen Vielfachen einer Teilung von Kettengelenken der Gliederkette entspricht. Eine solche Gliederkette kann über eine Vielzahl von Kettenrädern geführt werden, die vorzugsweise in einer gemeinsamen zweiten Transportebene angeordnet sind und kann beispielsweise als Werkstückspeicher und oder zum Transport der Werkstücke zu einer nachfolgenden Bearbeitungseinrichtung genutzt werden. Vorzugsweise ist die zweite Fördereinrichtung für einen kontinuierlichen Transport von Werkstücken vorgesehen, bei dem die Gliederkette mit einer konstanten Umlaufgeschwindigkeit bewegt wird.

Beispielhaft ist vorgesehen, dass die erste Fördereinrichtung und die zweite Fördereinrichtung zumindest in einem Umsetzbereich, in dem der erste Transportpfad und der zweite Transportpfad einen minimalen Abstand aufweisen, in parallel zueinander ausgerichteten Transportebenen angeordnet sind. Besonders bevorzugt ist vorgesehen, dass die beiden Fördereinrichtungen zumindest bereichsweise im Umsetzbereich in einer gemeinsamen Transportebene angeordnet sind. Dem Umsetzbereich ist eine erfindungsgemäße Umsetzeinrichtung zugeordnet, die zum Abziehen von hülsenförmigen Werkstücken von den ersten Aufnahmedornen der ersten Fördereinrichtung und zum Aufschieben der hülsenförmige Werkstücke auf die Aufnahmedorne der zweiten Fördereinrichtung ausgebildet ist. Somit dient die Umsetzeinrichtung zu einer Bereitstellung von Werkstücken, die mit der ersten Fördereinrichtung antransportiert werden, an die zweite Fördereinrichtung. Hierbei ermöglicht die Umsetzeinrichtung zum einen eine Anpassung zwischen unterschiedlichen Teilungen von ersten Aufnahmedornen der ersten Fördereinrichtung und zweiten Aufnahmedornen der zweiten Fördereinrichtung. Zum anderen kann die Umsetzeinrichtung dazu genutzt werden, Werkstücke von einer diskontinuierlich arbeitenden ersten Fördereinrichtung an eine kontinuierlich arbeitende zweite Fördereinrichtung bereitzustellen. Die vorstehenden Beschreibungen der ersten Fördereinrichtung und der zweiten Fördereinrichtung können auch genau in umgekehrter Weise vorliegen, so dass die erste Fördereinrichtung kontinuierlich fördert und die zweite Fördereinrichtung diskontinuierlich arbeitet. Es kann auch vorgesehen sein, dass beide Fördereinrichtungen diskontinuierlich oder kontinuierlich arbeiten.

Bei einer vorteilhaften Weiterbildung des Transportsystems ist vorgesehen, dass die Getriebeanordnung für eine Abstandsänderung zwischen dem ersten Werkstückgreifer und dem zweiten Werkstückgreifer für eine Anpassung an eine Teilung der ersten Fördereinrichtung und für eine Anpassung an eine Teilung der zweiten Fördereinrichtung ausgebildet ist.

Die Aufgabe der Erfindung wird gemäß einem dritten Erfindungsaspekt mit einem Verfahren nach Anspruch 9, zum Abziehen von hülsenförmigen Werkstücken von einer ersten Fördereinrichtung und zum Aufschieben der hülsenförmigen Werkstücke auf eine zweite Fördereinrichtung gelöst. Hierbei umfasst das Verfahren die nachfolgenden Schritte: Bereitstellen von Werkstücken mit einer ersten Fördereinrichtung, die eine Vielzahl von ersten Aufnahmedornen mit einer ersten Teilung aufweist, mit einer kontinuierlichen oder diskontinuierlichen Förderbewegung an einem Umsetzbereich, Abziehen von jeweils zwei Werkstücken von den ersten Aufnahmedornen mit einer ersten Linearbewegung, die längs einer Bewegungsachse durchgeführt wird, mit wenigstens zwei Werkstückgreifern einer Umsetzeinrichtung, wobei ein Abstand der Werkstückgreifer an die erste Teilung angepasst ist, Durchführen einer Schwenkbewegung der Werkstückgreifer um die Bewegungsachse, wobei eine Anpassung des Abstands der Werkstückgreifer an eine zweite Teilung einer Vielzahl von zweiten Aufnahmedornen einer zweiten Fördereinrichtung vorgenommen wird, Aufschieben der Werkstücke auf die zweiten Aufnahmedorne der zweiten Fördereinrichtung mit einer zweiten Linearbewegung, die längs einer Bewegungsachse in einer der ersten Linearbewegung entgegengesetzten Richtung durchgeführt wird, wobei die zweite Fördereinrichtung eine kontinuierliche oder diskontinuierliche Förderbewegung durchführt und wobei die ersten Aufnahmedorne und die zweiten Aufnahmedorne im Umsetzbereich parallel zueinander ausgerichtet und in parallel zueinander ausgerichteten Bewegungsebenen, insbesondere in einer gemeinsamen Bewegungsebene, angeordnet sind.

Bei einer vorteilhaften Weiterbildung des Verfahrens ist vorgesehen, dass bei der Durchführung der Schwenkbewegung für die Werkstückgreifer wenigstens einer der Werkstückgreifer zur Einstellung des Abstands zwischen den Werkstückgreifern eine überlagerte Drehbewegung um eine beabstandet zur Bewegungsachse angeordnete und parallel zur Bewegungsachse ausgerichtete Drehachse durchführt.

In weiterer Ausgestaltung des Verfahrens ist vorgesehen, dass die erste Fördereinrichtung während des Abziehens der Werkstücke und/oder die zweite Fördereinrichtung während des Aufschiebens der Werkstücke eine kontinuierliche Förderbewegung durchführt und dass die Umsetzeinrichtung eine phasengleiche Bewegung der Werkstückgreifer während des Abziehens der Werkstücke und/oder während des Aufschiebens der Werkstücke durchführt.

Eine vorteilhafte Ausführungsform der Erfindung ist in der Zeichnung dargestellt. Hierbei zeigt:
- Figur 1: eine schematische Vorderansicht auf ein Transportsystem mit einer ersten Fördereinrichtung, mit einer zweiten Fördereinrichtung sowie mit einer Umsetzeinrichtung zur Bereitstellung von Werkstücken, die mit der ersten Fördereinrichtung transportiert werden können, an die zweite Fördereinrichtung, und
- Figur 2: eine schematische Draufsicht auf das Transportsystem gemäß der Figur 1.

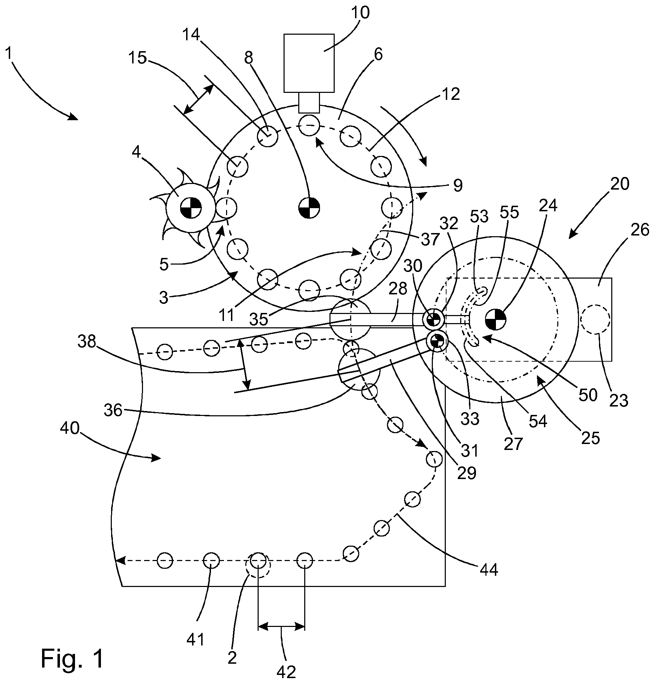

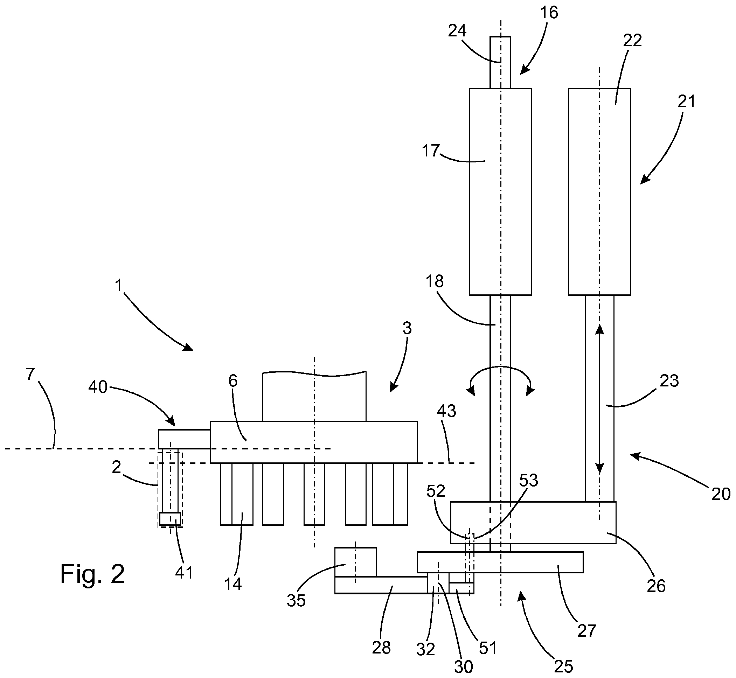

Ein in den Figuren 1 und 2 rein schematisch, nicht maßstäblich dargestelltes Transportsystem 1 ist zum Transport von Werkstücken 2 vorgesehen, wobei die Werkstücke 2 gemäß der beispielhaften Darstellung der Figur 2 als kreiszylindrische Hülsen mit geschlossenen ausgebildetem Bodenbereich verwirklicht sind. Rein exemplarisch sind die Werkstücke 2 als hülsenförmige Aerosoldosenrohlinge aus Aluminium oder als Kunststofftubenrohlinge ausgebildet.

Beispielhaft ist vorgesehen, dass eine Bereitstellung der Werkstücke 2 an eine erste Fördereinrichtung 3 mit Hilfe eines nur schematisch dargestellten Ladesterns 4 erfolgt, der die Werkstücke 2 an einer Zufuhrposition 5 auf Aufnahmedorne 14 eines Werkstückrundtischs 6 aufschiebt. Die Aufnahmedorne 14 sind rein exemplarisch quer zu einer Transportebene 7 ausgerichtet. Der Werkstückrundtisch 6 ist zur Durchführung einer intermittierenden Drehschrittbewegung ausgebildet, so dass die an den Aufnahmedornen 14 aufgenommenen, nicht näher dargestellten Werkstücke 2 an mehrere, nicht näher bezeichnete, jeweils in konstanter Winkelteilung bezogen auf einen Drehmittelpunkt 8 angeordneten Arbeitspositionen bereitgestellt werden können. Beispielhaft ist an einer Arbeitsposition 9 eine Druckeinrichtung 10 angeordnet, an der eine Außenoberfläche des Werkstücks 2 beispielsweise in einem Tintenstrahldruckverfahren bedruckt werden kann. An vorausgehenden und nachfolgenden, nicht näher bezeichneten Arbeitspositionen können weitere Bearbeitungsvorgänge für die Werkstücke vorgenommen werden.

Die Aufnahmedorne 14 der ersten Fördereinrichtung sind auf einem gemeinsamen Durchmesser 12 in konstanter Winkelteilung angeordnet, so dass die Aufnahmedorne 14 eine konstante Teilung 15 zueinander aufweisen.

An einer Abfuhrposition 11 erfolgt ein Abziehvorgang für die Werkstücke 2 mit Hilfe einer Umsetzeinrichtung 20. Die Umsetzeinrichtung 20 ermöglicht ein Abziehen der Werkstücke 2 von den Aufnahmedornen 14 sowie ein Aufschieben der Werkstücke 2 auf Aufnahmedorne 41 einer zweiten Fördereinrichtung 40, die rein exemplarisch als Kettenförderer ausgebildet ist. Hierbei sind die Aufnahmedorne 41 jeweils an nicht näher dargestellten Gelenkbolzen ebenfalls nicht näher dargestellter Kettenglieder angebracht und weisen eine zweite Teilung 42 auf, die sich beispielhaft von der ersten Teilung 15 der ersten Fördereinrichtung 3 unterscheidet. Beispielhaft ist vorgesehen, dass die Aufnahmedorne 41 in einer Transportebene 43 angeordnet sind, die parallel zur Transportebene 7 der ersten Fördereinrichtung 3 angeordnet ist.

Für die Durchführung des Umsetzvorgangs weist die Umsetzeinrichtung 20 beispielhaft einen Linearantrieb 21 auf, der rein exemplarisch als elektromechanischer Spindelantrieb ausgebildet ist, bei dem ein nicht näher dargestellter elektrischer Antriebsmotor in einem Antriebsgehäuse 22 aufgenommen ist. Das Antriebsgehäuse 22 ist in nicht näher dargestellter Weise mit einem Maschinengestell verbunden, das in ebenfalls nicht näher dargestellter Weise mit der ersten Fördereinrichtung 3 und mit der zweiten Fördereinrichtung 40 verbunden ist.

Am Antriebsgehäuse 22 ist eine Koppelstange 23 linearbeweglich gelagert, in deren Inneren beispielsweise eine Schlossmutter aufgenommen sein kann, um eine Rotationsbewegung einer ebenfalls nicht näher dargestellten, vom Antriebsmotor angetriebenen Gewindespindel in eine Linearbewegung der Koppelstange 23 umzusetzen. Die Koppelstange 23 kann somit eine oszillierende lineare Reversierbewegung längs einer Bewegungsachse 24 durchführen: An einem dem Antriebsgehäuse 22 abgewandten Endbereich der Koppelstange 23 ist eine Getriebeanordnung 25 angebracht, die eine rein exemplarisch rechteckig ausgebildete Grundplatte 26 und einen schwenkbeweglich um die Bewegungsachse 24 schwenkbaren, an der Grundplatte 26 beweglich gelagerten Schwenkkörper 27 umfasst, der rein exemplarisch als kreisrunde Planparallelplatte ausgebildet ist. Beispielhaft ist eine Schwenkachse des Schwenkkörpers 27 identisch mit der Bewegungsachse 24.

Beispielhaft ist vorgesehen, dass an dem Schwenkkörper 27 ein erster Werkstückgreifer 28 und ein zweiter Werkstückgreifer 29 angeordnet sind. Dabei ist der erste Werkstückgreifer 28 drehbeweglich um eine erste Drehachse 30 am Schwenkkörper 27 angebracht. Ferner ist der zweite Werkstückgreifer 29 drehbeweglich um eine zweite Drehachse 31 am Schwenkkörper 27 angebracht. Zudem sind der erste Werkstückgreifer 28 und der zweite Werkstückgreifer 29 jeweils mit koaxial zur jeweiligen Drehachse 30, 31 angeordneten und an den jeweiligen Werkstückgreifern 28, 29 festgelegten Zahnrädern 32, 33 versehen, die eine zwangsläufige, gegensinnige Bewegungskopplung der beiden Werkstückgreifer 28, 29 gewährleisten. Hierzu weisen die beiden Zahnräder 32, 33 jeweils den gleichen Durchmesser und eine identische Verzahnung auf. Ferner ist vorgesehen, dass an einem der ersten Drehachse 30 abgewandten Endbereich des ersten Werkstückgreifers 28 ein erster Greifbereich 35 ausgebildet ist, an dem ein Werkstück 2 in nicht näher dargestellter Weise aufgenommen werden kann. In gleicher Weise ist an einem der zweiten Drehachse 32 abgewandten Endbereich des zweiten Werkstückgreifers 29 ein zweiter Greifbereich 36 ausgebildet ist, an dem ein Werkstück 2 in nicht näher dargestellter Weise aufgenommen werden kann. Beispielhaft sind die beiden Greifbereiche 35, 36 jeweils becherartig ausgebildet, wobei eine Becheröffnung der Greifbereiche 35, 36, die zum Festlegen des jeweiligen Werkstücks 2 mit Unterdruck beaufschlagt werden kann, den Aufnahmedornen 14 bzw. den Aufnahmedornen 41 zugewandt sind und daher in der Figur 1 nicht sichtbar sind. Ferner ist vorgesehen, dass die beiden Greifbereiche 35, 36 jeweils auf Abschnitten einer Schwenkbahn 37 bewegt werden können. Die Schwenkbahn 37 kann beispielhaft als Kreisabschnitt ausgebildet sein, kann jedoch auch einen abweichenden Krümmungsverlauf aufweisen.

Um eine Einstellung eines Abstands 38 zwischen dem ersten Greifbereich 35 und dem zweiten Greifbereich 36 und damit eine Anpassung der Umsetzeinrichtung 20 and die unterschiedlichen Teilungen 15, 42 der beiden Fördereinrichtungen 3, 40 zu ermöglichen, ist eine Einleitung einer Schwenkbewegung auf die beiden Werkstückgreifer 28, 29 vorgesehen. Hierzu ist der erste Werkstückgreifer 28 mit einer Stelleinrichtung 50 gekoppelt, die eine Stellbewegung in Abhängigkeit von einer Schwenkstellung des Schwenkkörpers 27 gegenüber der Grundplatte 26 bewirkt. Hierzu umfasst die Stelleinrichtung 50 einen mit dem ersten Werkstückgreifer 28 starr verbundenen Koppelhebel 51, der sich rein exemplarisch in Verlängerung des ersten Werkstückgreifers 28 erstreckt und der mit einem parallel zur Bewegungsachse 24 ausgerichteten Steuerzapfen 52 verbunden ist. Der Steuerzapfen 52 durchsetzt eine nicht näher dargestellte Ausnehmung im Schwenkkörper 27 und greift in eine stirnseitig in der Grundplatte 26 eingebrachte Steuernut 53 ein. Die Steuernut 53 ist nur rein exemplarisch dargestellt, ein Verlauf der Steuernut 53 sowie von Steuerflächen 54, 55, die die Steuernut randseitig begrenzen, wird jeweils an die Bedürfnisse der Relativbewegung zwischen den beiden Werkstückgreifern 28, 29 angepasst.

Beispielhaft kann vorgesehen sein, dass die Steuernut 53 und die Steuerflächen 54, 55 derart ausgebildet sind, dass bei einer Schwenkbewegung des Schwenkkörpers 27 und der daran angebrachten Werkstückgreifer 28, 29 zwischen der ersten Fördereinrichtung 3 und der zweiten Fördereinrichtung 40 eine Vergrößerung des Abstands 38 zwischen den beiden Greifbereichen 35, 36 bewirkt werden kann und damit die gewünschte Teilungsänderung für das Umsetzen der Werkstücke 2 zwischen der ersten Fördereinrichtung 3 und der zweiten Fördereinrichtung 40 gewährleistet wird.

Die Bereitstellung der Schwenkbewegung für den Schwenkkörper 27 gegenüber der Grundplatte 26 erfolgt durch einen Schwenkantrieb 16, der ein mit dem Antriebsgehäuse 22 des Linearantriebs 21 gekoppeltes Schwenkantriebsgehäuse 17 und eine schwenkbeweglich am Schwenkantriebsgehäuse 17 gelagerte Schwenkwelle 18 umfasst. Beispielhaft ist der Schwenkantrieb 16 als elektrischer Getriebemotor ausgebildet, dessen Drehbewegung von einem nicht näher dargestellten, im Schwenkantriebsgehäuse 17 aufgenommenen Untersetzungsgetriebe untersetzt wird und als Schwenkbewegung, beispielsweise mit einem Schwenkwinkelintervall von 150 Grad, auf den Schwenkkörper 27 eingeleitet wird. Hierbei ist vorgesehen, dass die Schwenkbewegung als oszillierende Reversierbewegung bereitgestellt wird, so dass beispielsweise bei jeder zweiten Drehschrittbewegung des Werkstückrundtischs 6 jeweils zwei Werkstücke 2 abgezogen werden können und von der Umsetzeinrichtung 20 an die zweiten Aufnahmedorne 41 der zweiten Fördereinrichtung 40 bereitgestellt werden können, wobei die zweite Fördereinrichtung 40 rein exemplarisch für eine kontinuierliche Transportbewegung für die Werkstücke 2 vorgesehen ist.

Vorzugsweise ist vorgesehen, dass die Steuernut 53 und die Steuerflächen 54, 55 derart ausgebildet sind, dass zunächst während einer Abzugsbewegung für die Werkstücke 2 von den ersten Aufnahmedornen 14 solange keine Änderung des Abstands 38 erfolgt, bis die Werkstücke 2 vollständig von den Aufnahmedornen 14 abgezogen sind. Beispielhaft kann vorgesehen sein, dass der Linearantrieb 21 zu diesem Zeitpunkt deaktiviert wird, so dass zunächst keine weitere Linearbewegung der Getriebeanordnung 25 erfolgt. Anschließend wird der Schwenkantrieb 16 aktiviert, um eine Einleitung einer Schwenkbewegung auf die Getriebeanordnung 25 zu bewirken. Hierbei werden zum einen die am Schwenkkörper 27 drehbeweglich angebrachten Werkstückgreifer 28, 29 um die Bewegungsachse 24 verschwenkt. Ferner erfolgt aufgrund der Zwangskopplung der beiden Werkstückgreifer 28, 29 mittels der Zahnräder 32, 33 unter dem Einfluss der Stelleinrichtung eine Veränderung des Abstands 38 der beiden Greifbereiche 35, 36, so dass die beiden Greifbereiche 35, 36 vor Durchführung einer linearen Annäherungsbewegung an die zweiten Aufnahmedorne 41 der zweiten Fördereinrichtung 40 bereits den Abstand 38 aufweisen, der der Teilung 42 der zweiten Fördereinrichtung 40 entspricht. Anschließend erfolgt eine Aktivierung des Linearantriebs 21, wobei eine Ansteuerung des Schwenkantriebs 16 derart vorgenommen werden kann, dass eine Bewegungsgeschwindigkeit der beiden Greifbereiche 35, 36 mit einer Bewegungsgeschwindigkeit der Aufnahmedorne 41 übereinstimmt. Da ferner rein exemplarisch vorgesehen ist, dass ein Transportweg 44, der durch den Verlauf der nicht näher dargestellten Förderkette und der daran angebrachten Aufnahmedorne 41 festgelegt ist, zumindest bereichsweise mit der Schwenkbahn 37 für die beiden Greifbereiche 35, 36 übereinstimmt, können die an den Greifbereichen 35, 36 aufgenommenen Werkstücke 2 auf die Aufnahmedorne 41 der zweiten Fördereinrichtung 40 aufgeschoben werden, ohne dass hierbei eine relevante Geschwindigkeitsdifferenz und/oder eine Abweichung zwischen der Schwenkbahn 37 und dem zugeordneten Abschnitt des Transportwegs 44 vorliegt. Hierdurch wird ein zuverlässiges Aufschieben der Werkstücke 2 auf die Aufnahmedorne 41 auch bei hohen Taktzahlen für die Umsetzbewegung zwischen der ersten Fördereinrichtung 3 und der zweiten Fördereinrichtung 40 gewährleistet.

Bei der anschließenden Rückstellbewegung für die Umsetzeinrichtung 20 erfolgt eine gegenläufige Abstandsänderung der beiden Greifbereiche 35, 36, so dass die Greifbereiche 35, 36 bei einer linearen Annäherung an die ersten Aufnahmedorne 14 der ersten Fördereinrichtung 3 die Teilung 15 der ersten Aufnahmedorne 14 aufweisen.

## Patentansprüche

1. Umsetzeinrichtung (20) zum Abziehen von hülsenförmigen Werkstücken (2) von einer ersten Fördereinrichtung (3) und zum Aufschieben der hülsenförmigen Werkstücke (2) auf eine zweite Fördereinrichtung (40), mit einem Linearantrieb (21), der ein Antriebsgehäuse (22) und eine linearbeweglich am Antriebsgehäuse (22) aufgenommene Koppelstange (23) zur Bereitstellung einer Linearbewegung längs einer Bewegungsachse (24) umfasst, wobei an einem dem Antriebsgehäuse (22) abgewandten Endbereich der Koppelstange (23) eine Getriebeanordnung (25) angeordnet ist, die einen schwenkbeweglich um die Bewegungsachse (24) gelagerten Schwenkkörper (27) umfasst, an dem ein drehbeweglich um eine erste Drehachse (30) angebrachter erster Werkstückgreifer (28) und ein zweiter Werkstückgreifer (29) angeordnet sind, und wobei die Getriebeanordnung (25) eine Stelleinrichtung (50) umfasst, die für eine Einleitung einer Stellbewegung zur Einstellung eines Abstands (38) zwischen einem in radialer Richtung von der Bewegungsachse (24) entfernt angeordneten ersten Greifbereich (35) des ersten Werkstückgreifers (28) und einem in radialer Richtung von der Bewegungsachse (24) entfernt angeordneten zweiten Greifbereich (36) des zweiten Werkstückgreifers (29) ausgebildet ist, sowie mit einem Schwenkantrieb (16), der ein mit dem Antriebsgehäuse (22) gekoppeltes Schwenkantriebsgehäuse (17) und einer schwenkbeweglich am Schwenkantriebsgehäuse (17) gelagerte Schwenkwelle (18) umfasst, wobei die Schwenkwelle (18) für eine Einleitung einer Schwenkbewegung auf den Schwenkkörper (27) und für eine Ansteuerung der Stelleinrichtung (50) zur Einleitung einer mit der Schwenkbewegung verbundenen Zwangsschwenkbewegung auf den ersten Werkstückgreifer (28) ausgebildet ist.

2. Umsetzeinrichtung nach Anspruch 1, **dadurch gekennzeichnet, dass** die Stelleinrichtung (50) ein Steuermittel (26) umfasst, das drehfest mit der Koppelstange (23) verbunden ist und das wenigstens eine Steuerfläche (54, 55) umfasst, um bei einer Schwenkbewegung des Schwenkkörpers (27) und der daran angeordneten ersten Werkstückgreifer (28) und zweiten Werkstückgreifer (29) die Zwangsschwenkbewegung in Abhängigkeit von der Schwenkbewegung zu bewirken.

3. Umsetzeinrichtung nach Anspruch 2, **dadurch gekennzeichnet, dass** das Steuermittel (50) eine die Steuerfläche (54, 55) umfassende Steuernut (53) aufweist und dass der erste Werkstückgreifer (28) mit einem Führungsmittel (52), insbesondere mit einer Führungsrolle, in die Steuernut (53) eingreift.

4. Umsetzeinrichtung nach Anspruch 1, 2 oder 3, **dadurch gekennzeichnet, dass** der zweite Werkstückgreifer (29) drehbeweglich um eine zweite Drehachse (31) am Schwenkkörper (27) angebracht ist, wobei vorzugsweise vorgesehen ist, dass die erste Drehachse (30) des ersten Werkstückgreifers (28) und die zweite Drehachse (31) des zweiten Werkstückgreifers (30) jeweils mit identischem Radialabstand parallel zur Bewegungsachse (24) angeordnet sind.

5. Umsetzeinrichtung nach Anspruch 4, **dadurch gekennzeichnet, dass** die Getriebeanordnung (25) für eine schwenkwinkelabhängige Abstandseinstellung zwischen einem von der ersten Drehachse (30) beabstandet angeordneten Greifbereich (35) des ersten Werkstückgreifers (28) und einem von der zweiten Drehachse (31) beabstandet angeordneten Greifbereich (36) des zweiten Werkstückgreifers (29) ausgebildet ist.

6. Umsetzeinrichtung nach einem der vorhergehenden Ansprüche, **dadurch gekennzeichnet, dass** der erste Werkstückgreifer (28) und der zweite Werkstückgreifer (29) jeweils ein Greifmittel umfassen, das eine Ausnehmung aufweist, die für eine zeitweilige Festlegung eines quer zur Bewegungsachse (24) ausgerichteten Bodenbereichs und/oder eines parallel zur Bewegungsachse (24) ausgerichteten Hülsenabschnitts eines Werkstücks (2) ausgebildet ist, wobei eine Erstreckungsachse der Ausnehmung parallel zur Bewegungsachse (24) ausgerichtet ist.

7. Transportsystem (1) für hülsenförmige Werkstücke (2), mit einer ersten Fördereinrichtung (3), die eine Vielzahl von ersten Aufnahmedornen (14) mit einer ersten Teilung (15) umfasst und die für eine Bereitstellung einer Umlaufbewegung der ersten Aufnahmedorne (14) längs eines ersten Transportpfads ausgebildet ist, mit einer zweiten Fördereinrichtung (40), die eine Vielzahl von zweiten Aufnahmedornen (41) mit einer zweiten Teilung (42) umfasst und die für eine Bereitstellung einer Umlaufbewegung der zweiten Aufnahmedorne (41) längs eines zweiten Transportpfads ausgebildet ist, wobei die erste Fördereinrichtung (3) und die zweite Fördereinrichtung (40) zumindest in einem Umsetzbereich, in dem der erste Transportpfad und der zweite Transportpfad einen minimalen Abstand aufweisen, in parallel zueinander ausgerichteten Transportebenen angeordnet sind, sowie mit einer dem Umsetzbereich zugeordneten Umsetzeinrichtung (20) nach einem der vorhergehenden Ansprüche, die zum Abziehen von hülsenförmigen Werkstücken (2) von den ersten Aufnahmedornen (14) der ersten Fördereinrichtung (3) und zum Aufschieben der hülsenförmige Werkstücke (2) auf die Aufnahmedorne (41) der zweiten Fördereinrichtung (40) ausgebildet ist.

8. Transportsystem (1) nach Anspruch 7, **dadurch gekennzeichnet, dass** die Getriebeanordnung (25) für eine Abstandsänderung zwischen dem ersten Werkstückgreifer (28) und dem zweiten Werkstückgreifer (29) für eine Anpassung an eine Teilung (15) der ersten Fördereinrichtung (3) und für eine Anpassung an eine Teilung (42) der zweiten Fördereinrichtung (40) ausgebildet ist.

9. Verfahren zum Abziehen von hülsenförmigen Werkstücken (2) von einer ersten Fördereinrichtung (3) und zum Aufschieben der hülsenförmigen Werkstücke (2) auf eine zweite Fördereinrichtung (40), mit den Schritten: Bereitstellen von Werkstücken (2) mit einer ersten Fördereinrichtung (3), die eine Vielzahl von ersten Aufnahmedornen (14) mit einer ersten Teilung (15) aufweist, mit einer kontinuierlichen oder diskontinuierlichen Förderbewegung an einem Umsetzbereich, Abziehen von jeweils wenigstens zwei Werkstücken (2) von den ersten Aufnahmedornen (14) mit einer ersten Linearbewegung, die längs einer Bewegungsachse (24) durchgeführt wird, mit wenigstens zwei Werkstückgreifern (28, 29) einer Umsetzeinrichtung (20), wobei ein Abstand der Werkstückgreifer (28, 29) an die erste Teilung (15) angepasst ist, Durchführen einer Schwenkbewegung der Werkstückgreifer (28, 29) um die Bewegungsachse (24), wobei eine Anpassung des Abstands der Werkstückgreifer (28, 29) an eine zweite Teilung (42) einer Vielzahl von zweiten Aufnahmedornen (41) einer zweiten Fördereinrichtung (40) vorgenommen wird, Aufschieben der Werkstücke (2) auf die zweiten Aufnahmedorne (41) der zweiten Fördereinrichtung (40) mit einer zweiten Linearbewegung, die längs einer Bewegungsachse (24) in einer der ersten Linearbewegung entgegengesetzten Richtung durchgeführt wird, wobei die zweite Fördereinrichtung (40) eine kontinuierliche oder diskontinuierliche Förderbewegung durchführt und wobei die ersten Aufnahmedorne (14) und die zweiten Aufnahmedorne (41) im Umsetzbereich parallel zueinander ausgerichtet und in parallel zueinander ausgerichteten Bewegungsebenen, insbesondere in einer gemeinsamen Bewegungsebene, angeordnet sind.

10. Verfahren nach Anspruch 9, **dadurch gekennzeichnet, dass** bei der Durchführung der Schwenkbewegung für die Werkstückgreifer (28, 29) wenigstens einer der Werkstückgreifer (28, 29) zur Einstellung des Abstands (38) zwischen den Werkstückgreifern (28, 29) eine überlagerte Drehbewegung um eine beabstandet zur Bewegungsachse (24) angeordnete und parallel zur Bewegungsachse (24) ausgerichtete Drehachse durchführt.

11. Verfahren nach Anspruch 9 oder 10, **dadurch gekennzeichnet, dass** die erste Fördereinrichtung (3) während des Abziehens der Werkstücke (2) und/oder die zweite Fördereinrichtung (40) während des Aufschiebens der Werkstücke (2) eine kontinuierliche Förderbewegung durchführt und dass die Umsetzeinrichtung (20) eine phasengleiche Bewegung der Werkstückgreifer (28, 29) während des Abziehens der Werkstücke (2) und/oder während des Aufschiebens der Werkstücke (2) durchführt.

## Claims

1. A transfer system (20) for removing sleeve-shaped workpieces (2) from a first conveyor (3) and for pushing the sleeve-shaped workpieces (2) onto a second conveyor (40), having a linear drive (21) which comprises a drive housing (22) and a coupling rod (23), which is accommodated in a linearly movable manner on the drive housing (22), for providing a linear movement along an axis of movement (24), wherein a gear unit (25) is arranged at an end region of the coupling rod (23) remote from the drive housing, said gear unit (25) comprising a swivel body (27) which is mounted so as to be pivotable about the axis of movement (24) and on which a first workpiece gripper (28) and a second workpiece gripper (29) are arranged so as to be rotatable about a first axis of rotation (30), and wherein the gear unit (25) comprises an adjuster (50), which is designed for initiating an actuating movement for setting a distance between a first gripping region (35) of the first workpiece gripper (28), which is arranged at a distance from the axis (24) of movement in the radial direction, and a second gripping region (36) of the second workpiece gripper (29), which is arranged at a distance from the axis of movement (24) in the radial direction, and having a swivel drive (16), which comprises a swivel drive housing (17) coupled to the drive housing (22) and a swivel shaft (18) mounted on the swivel drive housing (17) so as to be swivellably movable, the swivel shaft (18) being designed for initiating a swivelling movement on the swivel body (27) and for actuating the adjuster (50) for initiating a forced swivelling movement connected to the swivelling movement on the first workpiece gripper (28).

2. The transfer system according to claim 1, wherein the adjuster (50) comprises a guidance (26) which is connected in a rotationally fixed manner to the coupling rod (23) and which comprises at least one control surface (54, 55) in order to effect the forced swivelling movement as a function of the swivelling movement during a swivelling movement of the swivelling body (27) and the first workpiece grippers (28) and second workpiece grippers (29) arranged thereon.

3. The transfer system according to claim 2, wherein the guidance (26) has a control groove (53) comprising the control surface (54, 55) and wherein the first workpiece gripper (28) engages in the control groove (53) with a control device (52), in particular with a control roll.

4. The transfer system according to claim 1, 2 or 3, wherein the second workpiece gripper (29) is mounted on the swivel body (27) so as to be rotatable about a second axis of rotation (31), wherein preferably the first axis of rotation (30) of the first workpiece gripper (28) and the second axis of rotation (31) of the second workpiece gripper (30) are each arranged at an identical radial distance parallel to the axis of movement (24).

5. The transfer system according to claim 4, wherein the gear unit (25) is designed for a pivot angle-dependent distance adjustment between a gripping region (35) of the first workpiece gripper (28) arranged at a distance from the first axis (30) of rotation and a gripping region (36) of the second workpiece gripper (29) arranged at a distance from the second axis of rotation (31).

6. The transfer system according to one of claims 1 to 5, wherein the first workpiece gripper (28) and the second workpiece gripper (29) each comprise a gripper which has a recess which is designed for temporarily fixing a base region aligned transversely to the axis of movement (24) and/or a sleeve section of a workpiece (2) aligned parallel to the axis of movement (24), an axis of extension of the recess being aligned parallel to the axis of movement (24).

7. A transport system (1) for sleeve-shaped workpieces (2), having a first conveyor (3), which comprises a plurality of first mandrels (14) with a first pitch (15) and which is designed to provide a circulatory movement of the first mandrels (14) along a first transport path, having a second conveyor (40), which comprises a plurality of second mandrels (41) with a second pitch (42) and which is designed to provide a circulatory movement of the second mandrels (41) along a second transport path, wherein the first conveyor (3) and the second conveyor (41) are arranged in transport planes aligned parallel to one another at least in a transfer region in which the first transport path and the second transport path have a minimum distance apart, as well as with a transfer system (20) associated with the transfer area according to one of the preceding claims, which is designed for removing sleeve-shaped workpieces (2) from the first mandrels (14) of the first conveyor (3) and for pushing the sleeve-shaped workpieces (2) onto the mandrels (41) of the second conveyor (40) .

8. The transfer system according to claim 7, wherein the gear unit (25) is designed for a change in distance between the first workpiece gripper (28) and the second workpiece gripper (29) for adaptation to a pitch (15) of the first conveyor (28) and for adaptation to a pitch (42) of the second conveyor (40).

9. A method for removing sleeve-shaped workpieces (2) from a first conveyor (3) and for pushing the sleeve-shaped workpieces (2) onto a second conveyor (40), with the steps: providing workpieces (2) with a first conveyor (3), which has a plurality of first mandrels (14) with a first pitch (15), with a continuous or discontinuous conveying movement at a transfer region, removing at least two workpieces (2) at a time from the first mandrels (14) with a first linear movement, which is carried out along an axis of movement (24), with at least two workpiece grippers (28, 29) of a transfer system (20), wherein a spacing of the workpiece grippers (28, 29) is adapted to the first pitch (15), carrying out a pivoting movement of the workpiece grippers (28, 29) about the axis of movement (24), wherein an adaptation of the spacing of the workpiece grippers (28, 29) to a second pitch (42) of a plurality of second mandrels (41) of a second conveyor (40), pushing the workpieces (2) onto the second mandrels (41) of the second conveyor (40) with a second linear movement which is carried out along an axis of movement (24) in a direction opposite to the first linear movement, wherein the second conveyor (40) performs a continuous or discontinuous conveying movement and wherein the first mandrels (14) and the second mandrels (41) are aligned parallel to one another in the transfer region and are arranged in planes of movement aligned parallel to one another.

10. The method according to claim 9, wherein when performing the pivoting movement for the workpiece grippers (28, 29) at least one of the workpiece grippers (28, 29) performs a superimposed rotational movement about an axis of rotation arranged at a distance from the axis of movement (24) and aligned parallel to the axis of movement (24) in order to adjust the distance (38) between the workpiece grippers (28, 29) .

11. The method according to claim 9 or 10, wherein the first conveyor (3) performs a continuous conveying movement during the removal of the workpieces (2) and/or the second conveyor (40) performs a continuous conveying movement during the pushing on of the workpieces (2), and wherein the transfer system (20) performs a phase-synchronised movement of the workpiece grippers (28, 29) during the removal of the workpieces (2) and/or during the pushing on of the workpieces (2) .

## Revendications

1. Dispositif de transfert (20) pour enlever des pièces (2) en forme de manchon d'un premier dispositif de convoyage (3) et pour pousser les pièces (2) en forme de manchon sur un deuxième dispositif de convoyage (40), avec un entraînement linéaire (21), qui comprend un carter d'entraînement (22) et une tige d'accouplement (23) reçue de manière mobile linéairement sur le carter d'entraînement (22) pour la fourniture d'un mouvement linéaire le long d'un axe de mouvement (24), dans lequel sur une zone d'extrémité de la tige d'accouplement (23) opposée au carter d'entraînement (22) est disposé un ensemble de transmission (25), qui comprend un corps pivotant (27) monté de manière mobile en pivotement autour de l'axe de mouvement (24), sur lequel sont disposés un premier préhenseur de pièce (28) posé de manière mobile en rotation autour d'un premier axe de rotation (30) et un deuxième préhenseur de pièce (29), et dans lequel l'ensemble de transmission (25) comprend un dispositif de réglage (50), qui est réalisé pour une application d'un mouvement de réglage pour le réglage d'un écart (38) entre une première zone de préhension (35) du premier préhenseur de pièce (28) disposée de manière espacée de l'axe de mouvement (24) dans la direction radiale et une deuxième zone de préhension (36) du deuxième préhenseur de pièce (29) disposée de manière espacée de l'axe de mouvement (24) dans la direction radiale, ainsi qu'avec un entraînement pivotant (16), qui comprend un carter d'entraînement pivotant (17) accouplé au carter d'entraînement (22) et un arbre de pivotement (18) monté de manière mobile en pivotement sur le carter d'entraînement pivotant (17), dans lequel l'arbre de pivotement (18) est réalisé pour l'application d'un mouvement pivotant sur le corps pivotant (27) et pour une commande du dispositif de réglage (50) pour l'application d'un mouvement pivotant forcé relié au mouvement pivotant sur le premier préhenseur de pièce (28).

2. Dispositif de transfert selon la revendication 1, **caractérisé en ce que** le dispositif de réglage (50) comprend un moyen de commande (26), qui est relié de manière solidaire en rotation à la tige d'accouplement (23) et qui comprend au moins une surface de commande (54, 55) afin, lors d'un mouvement pivotant du corps pivotant (27) et des premier préhenseur de pièce (28) et deuxième préhenseur de pièce (29) disposés sur celui-ci, de provoquer le mouvement pivotant forcé en fonction du mouvement pivotant.

3. Dispositif de transfert selon la revendication 2, **caractérisé en ce que** le moyen de commande (50) présente une rainure de commande (53) comprenant la surface de commande (54, 55) et que le premier préhenseur de pièce (28) s'insère avec un moyen de guidage (52), en particulier avec un rouleau de guidage, dans la rainure de commande (53).

4. Dispositif de transfert selon la revendication 1, 2 ou 3, **caractérisé en ce que** le deuxième préhenseur de pièce (29) est posé sur le corps pivotant (27) de manière mobile en rotation autour d'un deuxième axe de rotation (31), dans lequel il est prévu de préférence que le premier axe de rotation (30) du premier préhenseur de pièce (28) et le deuxième axe de rotation (31) du deuxième préhenseur de pièce (29) soient disposés respectivement avec un écart radial identique parallèlement à l'axe de mouvement (24).

5. Dispositif de transfert selon la revendication 4, **caractérisé en ce que** l'ensemble de transmission (25) est réalisé pour un réglage d'écart dépendant de l'angle de pivotement entre une zone de préhension (35) du premier préhenseur de pièce (28) disposée de manière espacée du premier axe de rotation (30) et une zone de préhension (36) du deuxième préhenseur de pièce (29) disposée de manière espacée du deuxième axe de rotation (31).

6. Dispositif de transfert selon l'une quelconque des revendications précédentes, **caractérisé en ce que** le premier préhenseur de pièce (28) et le deuxième préhenseur de pièce (29) comprennent respectivement un moyen de préhension, qui présente un évidement qui est réalisé pour une fixation temporaire d'une zone de fond orientée transversalement par rapport à l'axe de mouvement (24) et/ou d'une partie de manchon d'une pièce (2) orientée parallèlement à l'axe de mouvement (24), dans lequel un axe d'étendue de l'évidement est orienté parallèlement à l'axe de mouvement (24).

7. Système de transport (1) pour des pièces (2) en forme de manchon, avec un premier dispositif de convoyage (3), qui comprend une pluralité de premiers mandrins de réception (14) avec un premier pas (15) et qui est réalisé pour une fourniture d'un mouvement de rotation des premiers mandrins de réception (14) le long d'un premier trajet de transport, avec un deuxième dispositif de convoyage (40), qui comprend une pluralité de deuxièmes mandrins de réception (41) avec un deuxième pas (42) et qui est réalisé pour une fourniture d'un mouvement de rotation des deuxièmes mandrins de réception (41) le long d'un deuxième trajet de transport, dans lequel le premier dispositif de convoyage (3) et le deuxième dispositif de convoyage (40) sont disposés au moins dans une zone de transfert, dans laquelle le premier trajet de transport et le deuxième trajet de transport présentent un écart minimal, dans des plans de transport orientés parallèlement les uns aux autres, ainsi qu'avec un dispositif de transfert (20) selon l'une quelconque des revendications précédentes associé à la zone de transfert, qui est réalisé pour enlever des pièces (2) en forme de manchon des premiers mandrins de réception (14) du premier dispositif de convoyage (3) et pour pousser les pièces (2) en forme de manchon sur les mandrins de réception (41) du deuxième dispositif de convoyage (40).

8. Système de transport (1) selon la revendication 7, **caractérisé en ce que** l'ensemble de transmission (25) est réalisé pour une modification d'écart entre le premier préhenseur de pièce (28) et le deuxième préhenseur de pièce (29) pour une adaptation à un pas (15) du premier dispositif de convoyage (3) et pour une adaptation à un pas (42) du deuxième dispositif de convoyage (40).

9. Procédé pour enlever des pièces (2) en forme de manchon d'un premier dispositif de convoyage (3) et pour pousser les pièces (2) en forme de manchon sur un deuxième dispositif de convoyage (40), avec les étapes suivantes : fourniture de pièces (2) avec un premier dispositif de convoyage (3), qui présente une pluralité de premiers mandrins de réception (14) avec un premier pas (15), avec un mouvement de convoyage continu ou discontinu sur une zone de transfert, enlèvement de respectivement au moins deux pièces (2) des premiers mandrins de réception (14) avec un premier mouvement linéaire, qui est mis en oeuvre le long d'un axe de mouvement (24), avec au moins deux préhenseurs de pièce (28, 29) d'un dispositif de transfert (20), dans lequel un écart entre les préhenseurs de pièce (28, 29) est adapté au premier pas (15), mise en oeuvre d'un mouvement pivotant des préhenseurs de pièce (28, 29) autour de l'axe de mouvement (24), dans lequel une adaptation de l'écart des préhenseurs de pièce (28, 29) à un deuxième pas (42) d'une pluralité de deuxièmes mandrins de réception (41) d'un deuxième dispositif de convoyage (40) est effectuée, poussée des pièces (2) sur les deuxièmes mandrins de réception (41) du deuxième dispositif de convoyage (40) avec un deuxième mouvement linéaire, qui est mis en œuvre le long d'un axe de mouvement (24) dans une direction opposée au premier mouvement linéaire, dans lequel le deuxième dispositif de convoyage (40) met en œuvre un mouvement de convoyage continu ou discontinu et dans lequel les premiers mandrins de réception (14) et les deuxièmes mandrins de réception (41) sont orientés dans la zone de transfert parallèlement les uns aux autres et disposés dans des plans de mouvement orientés parallèlement les uns aux autres, en particulier dans un plan de mouvement commun.

10. Procédé selon la revendication 9, **caractérisé en ce que** lors de la mise en œuvre du mouvement pivotant pour les préhenseurs de pièce (28, 29) au moins un des préhenseurs de pièce (28, 29) pour le réglage de l'écart (38) entre les préhenseurs de pièce (28, 29) met en œuvre un mouvement rotatif prioritaire autour d'un axe de rotation disposé de manière espacée de l'axe de mouvement (24) et orienté parallèlement à l'axe de mouvement (24).

11. Procédé selon la revendication 9 ou 10, **caractérisé en ce que** le premier dispositif de convoyage (3) pendant l'enlèvement des pièces (2) et/ou le deuxième dispositif de convoyage (40) pendant la poussée des pièces (2) met en œuvre un mouvement de convoyage continu et que le dispositif de transfert (20) met en œuvre un mouvement en phase des préhenseurs de pièce (28, 29) pendant l'enlèvement des pièces (2) et/ou pendant la poussée des pièces (2).
